# EUROPEAN PATENT APPLICATION

(11) **EP 1 300 811 A1**
(43) Date of publication of application: **09.04.2003**
(21) Application number: 01947886.6
(22) Date of filing: 06.07.2001
(51) Int. Cl.: G07D 9/06, B65G 57/30

(54) **COIN STACKER**

(30) Priority: 07.07.2000 JP 2000206703
(71) Applicant: Glory Kogyo Kabushiki Kaisha, Himeji-shi, Hyogo 670-8567 (JP)
(72) Inventor: SUGAHARA, Kazuma, c/o Glory Kogyo Kabushiki Kaisha, Himeji-shi, Hyogo 670-8567 (JP); INUKI, Yusuke, c/o Glory Kogyo Kabushiki Kaisha, Himeji-shi, Hyogo 670-8567 (JP)
(74) Representative: Jenkins, Peter David
(86) International application number: JP0105886
(87) International publication number: WO02005221

(57) **Abstract**

The top end portion of the outer peripheral surface of a coin feeding roller (4) protrudes in a stacking section (3) as a rotating friction surface (40) so as to correspond to the end portion of a coin passage (1). A plurality of coins (C) are conveyed to the end portion of the coin passage (1) in a row in a direction of diameter of the coins by means of a conveying mechanism (2). The rotating friction surface (40) of the feeding roller rotates while contacting the lower surface of the conveyed coin (C), to cause the coin to get over the rotating friction surface from an upstream side to a downstream side of the friction surface with respect to the direction of rotation thereof. Thus, the roller (4) displaces the trailing edge of the previously conveyed coin upwards so that the leading edge of a subsequently conveyed coin can enter between the previously conveyed coin and the friction surface. By repeating this operation, a plurality of conveyed coins are sequentially stacked in the stacking section. By thus stacking the coins by the feeding roller (4) having the cylindrical rotating friction surface (40), it is possible to avoid functional restrictions caused by the relationship between the length of a tooth and the diameter of the coins in a conventional toothed roller.

## Description

### Technical Field

The present invention relates to a coin stacking apparatus for use in a coin wrapping machine or the like, the coin stacking apparatus being used for stacking the coins that have been conveyed in a coin passage one by one, in a row in a direction of thickness of the coins.

### Background Art

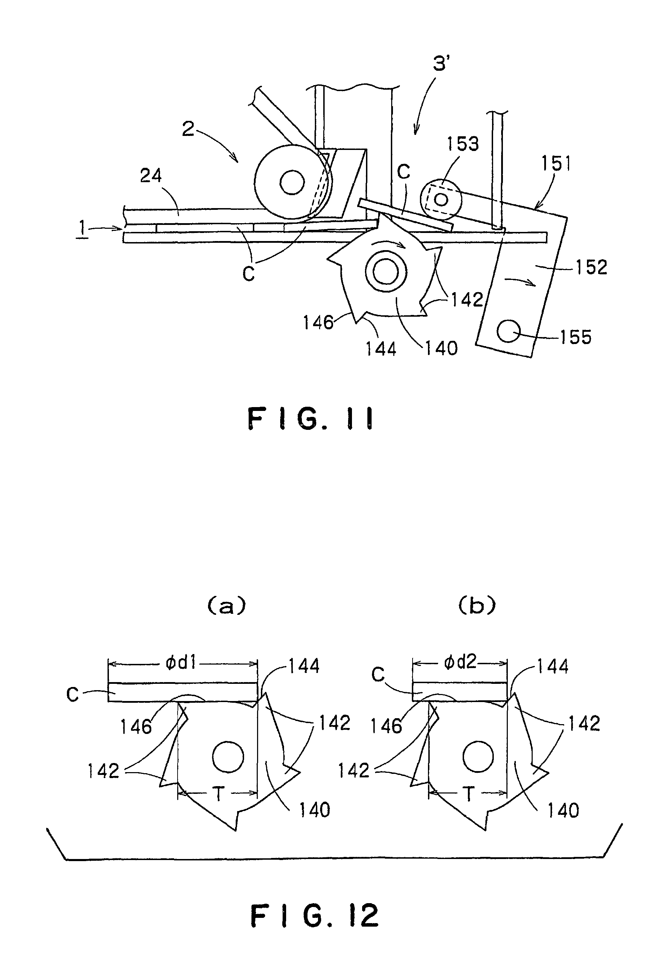

FIG. 11 shows a principal part of a conventional coin stacking apparatus. The coin stacking apparatus shown in FIG. 11 comprises a coin passage 1, a conveying mechanism 2, a coin stacking section 3', and a coin feeding member 140.

The coin passage 1 serves to guide a plurality of coins C in a row in a direction of diameter of the coins. The conveying mechanism 2 serves to convey the coins C along the coin passage 1 by a conveying belt 24. The coin stacking section 3' provided so as to correspond to the end portion of the coin passage 1 serves to stack the coins C that have been conveyed by the conveying mechanism 2, in a row in a direction of thickness of the coins. In this case, the coins C are conveyed in the coin passage 1 in a substantially horizontal direction to be stacked in the coin stacking section 3' substantially vertically upward.

The coin feeding member 140 serves to sequentially stack the conveyed coins C that have been conveyed to the end portion of the coin passage 1, in the stacking section 3'. The feeding member 140 has a plurality of tooth portions 142 arranged in circumferential directions, and is in the form of a toothed roller rotatable clockwise in the figure. Each of the tooth portions 142 has a push surface 144 formed on the upstream side with respect to the direction of rotation of the feeding member 140 and extending in a substantially radial direction, and a lifting surface 146 formed on the downstream side with respect to the direction of rotation and extending in a substantially tangential direction.

If the push surface 144 of the tooth portion 142 is pressed by the leading edge of a conveyed coin C, the coin feeding member 140 is passively rotated by the driving force applied to the coin C. The coin feeding member 140 lifts the trailing edge of the coin C having been already fed in the stacking section 3', by the lifting surface 146 of the tooth portion 142 in accordance with the rotation of the coin feeding member 140, so that the leading edge of a subsequently conveyed coin C can enter between the lifted coin C and the feeding member 140. By repeating such an operation, a plurality of conveyed coins C are sequentially stacked in the stacking section 3'.

The coin stacking apparatus comprises a coin presser mechanism 151 for downwardly pressing an upper surface of an uppermost coin, the coin being to be stacked in the stacking section 3'. The coin presser mechanism 151 has a lever 152 oscillatable around a shaft 155, and a contact roller 153 provided at the distal end of the lever 152.

The coin presser mechanism 151 also has a spring with change point (not shown). The lever 152 on which the spring acts presses the uppermost coin downward via the roller 153 at the beginnings, and after a predetermined number of coins are stacked in the stacking section 3', the pressing is released and the lever 152 greatly oscillates clockwise to be retracted from the stacking section 3'.

In the above described conventional coin stacking apparatus, there are the following problems. First, as shown in FIG. 12, it is assumed that the length of the tooth portion 142 of the coin feeding member 140 (the dimension from the tip of the tooth portion 142 to the push surface 144 of the next tooth portion 142 on the right) is T. Then, in case of a large-diameter coin C shown in FIG. 12(a), assuming that the diameter of the coin C is d1, in theory, if (d1/2) < T is not established, the coin C falls down to the left side, so that the lifting surface 146 can not lift the coin C.

On the other hand, in case of a small-diameter coin C shown in FIG. 12(b), assuming that the diameter of the coin C is d2, in theory, if T < d2 is not established, the feeding member 140 can not completely rotated until the leading edge of the subsequent coin C is capable of entering between the preceding coin C and the feeding member 140. Finally, in theory, the coins can not be stacked by the action of the coin feeding member 140 unless (d1/2) < T < d2 is established.

Therefore, d1 < 2 x d2 is established as conditions for the coins, so that the coin feeding member 140 can not cope with both first coins and second coins having diameters at least twice the diameters of the first coins, in theory. The diameter range of coins capable of being smoothly stacked by an actual apparatus is narrower than the above described theoretical range. Thus, in the conventional coin stacking apparatus using the toothed roller type feeding member 140, there are problems with respect to the adaptable range of diameters of coins.

### Disclosure of the Invention

The present invention has been made in view of the foregoing, and it is an object of the present invention to provide a coin stacking apparatus capable of preventing functional restrictions caused by the relationship between the length of a tooth and the diameter of the coins in a conventional toothed roller and capable of increasing a range adapted to coins having different diameters.

In order to accomplish this object, according to the present invention, there is provided a coin stacking apparatus comprising: a coin passage for guiding a plurality of coins in a row in a direction of diameter of the coins; a conveying mechanism for conveying the coins along the coin passage; a coin stacking section provided so as to correspond to the end portion of the coin passage, for stacking the coins that have been conveyed by the conveying mechanism, in a row in a direction of thickness of the coins; and a coin feeding member for sequentially stacking the conveyed coins that have been conveyed to an end portion of the coin passage, in the stacking section, wherein the feeding member has a cylindrical rotating friction surface protruding in the stacking section so as to correspond to the end portion of the coin passage, and the rotating friction surface rotates while contacting one surface of the conveyed coin, to cause the coin to get over from an upstream side to a downstream side of the friction surface with respect to the direction of rotation thereof, to displace the trailing edge of the coin in the stacking direction so that the leading edge of a subsequently conveyed coin is capable of entering between the previously conveyed coin and the friction surface.

According to this coin stacking apparatus, if the leading edge of the conveyed coin that has been conveyed to the end portion of the coin passage by the conveying mechanism reaches the rotating friction surface of the feeding member, the friction surface lifts the frond edge of the conveyed coin to rotate while contacting one surface of the coin, to cause the coin to get over the friction surface from the upstream side to the downstream side of the friction surface with respect to the direction of rotation thereof. Thus, the trailing edge of the previously conveyed coin (preceding coin) is displaced in the stacking direction so that the leading edge of the subsequently conveyed coin (subsequent coin) can enter between the previously conveyed coin and the friction surface of the feeding member. Then, the subsequent coin entering between the preceding coin and the friction surface of the feeding member gets over the friction surface with the rotation of the friction surface, in the same way as the preceding coin. By repeating the above described operation, a plurality of conveyed coins are sequentially stacked in the stacking section.

Thus, according to the coin stacking apparatus of the present invention, it is possible to stack the coins by means of the feeding member having the substantially cylindrical rotating friction surface in place of the conventional toothed roller. For that reason, it is possible to avoid functional restrictions caused by the relationship between the length of a tooth and the diameter of the coins in the conventional toothed roller, and to increase an adaptable range of diameters of coins.

The above described coin stacking apparatus preferably further comprises a driving system for rotating the friction surface of the feeding member. In this case, it is possible to positively rotate the friction surface of the feeding member by means of the driving system. Thus, it is possible to avoid an engagement between peripheral grooves of the coins due to the pressing of the coins to each other in the direction of diameter of the coins, such as a case where the friction surface of the feeding roller is passively rotated by the driving force applied to the conveyed coin.

In this case, the feeding member is preferably formed so that the friction surface is capable of freely rotating in the direction of rotation based on the driving system. With such a construction, even if the conveyed coin enters at a velocity exceeding the peripheral velocity of the friction surface rotated by the driving system, it is possible to absorb the velocity difference by the free rotation of the friction surface to ensure smooth stacking operation.

In the above described coin stacking apparatus, irregularities are preferably formed on the friction surface of the feeding member. With such a construction, by applying vibrations to the coin by the irregularities of the rotating friction surface, the interference state, such as an engagement between the coins, can be easily released to ensure smooth stacking operation.

In the above described coin stacking apparatus, the position of the feeding member with respect to the coin passage is preferably adjustable in accordance with the diameter of the coins. With such a construction, the above described function of the friction surface of the feeding roller for "lifting the leading edge of the conveyed coin to rotate while contacting one surface of the coin, to cause the coin to get over the friction surface from the upstream side to the downstream side of the friction surface with respect to the direction of rotation thereof" can be always surely carried out in spite of the variation in diameter of the coin.

In the above described coin stacking apparatus, preferably, a stopping member having a contact surface contacting the leading edge of the coin that has got over the friction surface is provided on the downstream side of the friction surface with respect to the direction of rotation thereof, and the distance between an axis of rotation of the friction surface of the feeding member and the contact surface of the stopping member is adjustable in accordance with the diameter of the coins. With such a construction, the above described function of the feeding roller for "displacing the trailing edge of the coin getting over the rotating friction surface in the stacking direction" can be always surely carried out in spite of the variation in diameter of the coin.

In the above described coin stacking apparatus, the stacking section may be configured to stack the coins substantially vertically upwards. In this case, the coin stacking apparatus preferably further comprises a coin presser mechanism for always downwardly pressing an upper surface of an uppermost coin stacked in the stacking section by dead weight. With such a construction, stacking failure due to the rising of coins in the stacking section can be surely prevented to the end, unlike a conventional coin presser mechanism wherein pressing is released after a predetermined number of coins are stacked.

In this case, the presser mechanism preferably has a presser member movable in a coin stacking direction while contacting the upper surface of the uppermost coin, and a weight member connected to the presser member via an elastic member. With such a construction, when the subsequent coin enters the stacking section to lift the presser member, the inertia force of the weight member acting on the stacked coins via the presser member can be relieved by the elastic member. Thus, it is possible to allow the subsequent coin to easily enter the stacking section while securing the pressing function of the whole presser mechanism by dead weight.

### Brief Description of the Drawings

FIG. 1 is a longitudinal section showing a principal part of the first preferred embodiment of a coin stacking apparatus according to the present invention;
FIG. 2 is a perspective view corresponding to the principal part of the coin stacking apparatus shown in FIG. 1;
FIG. 3 is a perspective view showing an example of a coin wrapping machine including the coin stacking apparatus shown in FIG. 1;
FIG. 4 is a simplified longitudinal section of the coin wrapping machine shown in FIG. 3;
FIG. 5 is a simplified horizontal section of the coin wrapping machine shown in FIG. 3;
FIG. 6 is a diagram showing the coin stacking operation of the coin stacking apparatus shown in FIG. 1, in order of (a) through (d);
FIG. 7a is a diagram showing a coin feeding roller and a stopping member of the coin stacking apparatus shown in FIG. 1, at a position corresponding to a small-diameter coin;
FIG. 7b is a plan view showing a principal part of FIG. 7a and showing a part thereof as a horizontal section;
FIG. 8a is a diagram similar to FIG. 7a when corresponding to a large-diameter coin;
FIG. 8b is a diagram similar to FIG. 7b when corresponding to a large-diameter coin;
FIG. 9 is a longitudinal section showing a principal part of the second preferred embodiment of a coin stacking apparatus according to the present invention;
FIG. 10 is a longitudinal section showing a principal part of the third preferred embodiment of a coin stacking apparatus according to the present invention;
FIG. 11 is a diagram showing a principal part of a conventional coin stacking apparatus; and
FIG. 12 is a diagram showing the relationship between a coin feeding member and a coin in the coin stacking apparatus shown in FIG. 11, corresponding to (a) a large-diameter coin and (b) a small-diameter coin.

### Best Mode for Carrying Out the Invention

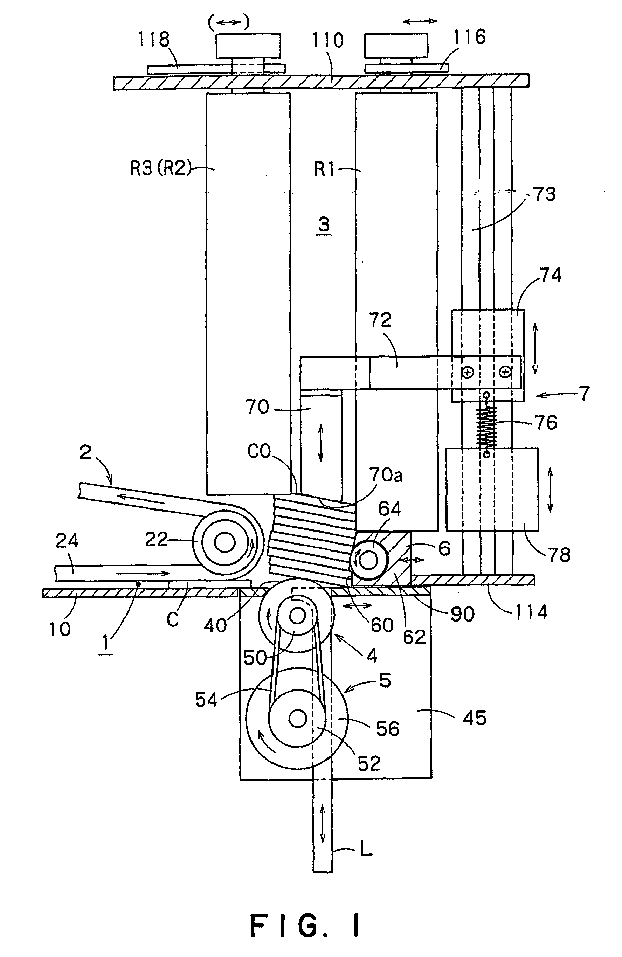

Referring to the accompanying drawings, the preferred embodiments of the present invention will be described. FIGS. 1 through 10 show preferred embodiments wherein a coin stacking apparatus according to the present invention is applied to a coin wrapping machine.

### [First Preferred Embodiment]

First, referring to FIG. 1 through 8b, the first preferred embodiment of the present invention will be described. The whole construction, the concrete constructions of the respective sections, operation, function and effects of this preferred embodiment will be sequentially described below.

### <Whole Construction>

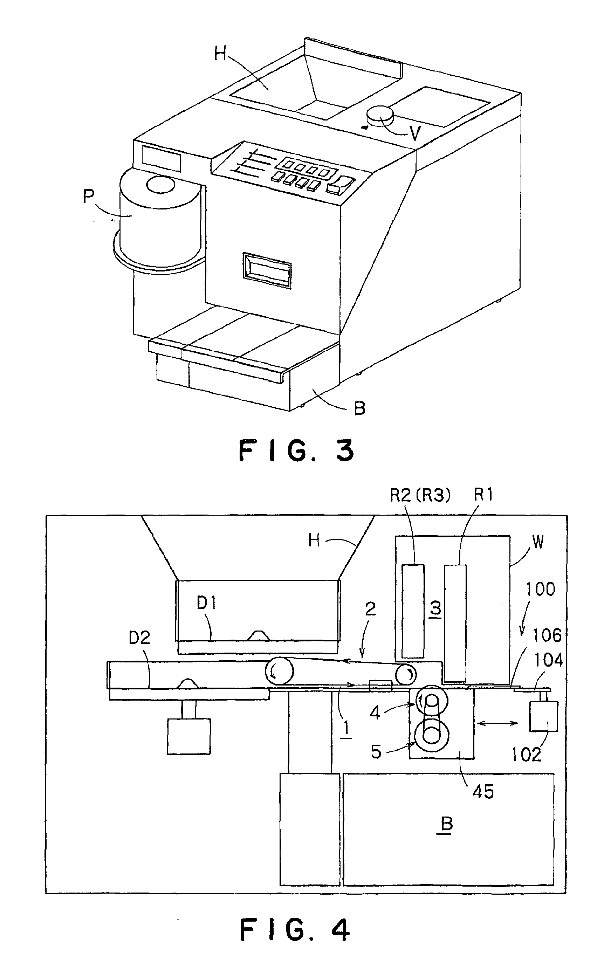

FIG. 3 shows a coin wrapping machine including a coin stacking apparatus of this preferred embodiment. The coin wrapping machine shown in FIG. 3 has a hopper for receiving a new supply of coins, and a denomination setting dial V for setting the kind of coins, on the upper surface thereof. The coin wrapping machine has a wrapped coin box B for storing wrapped coins, on the lower front side. On the front side, a wrapping paper P for wrapping coins is mounted in the form of a roll.

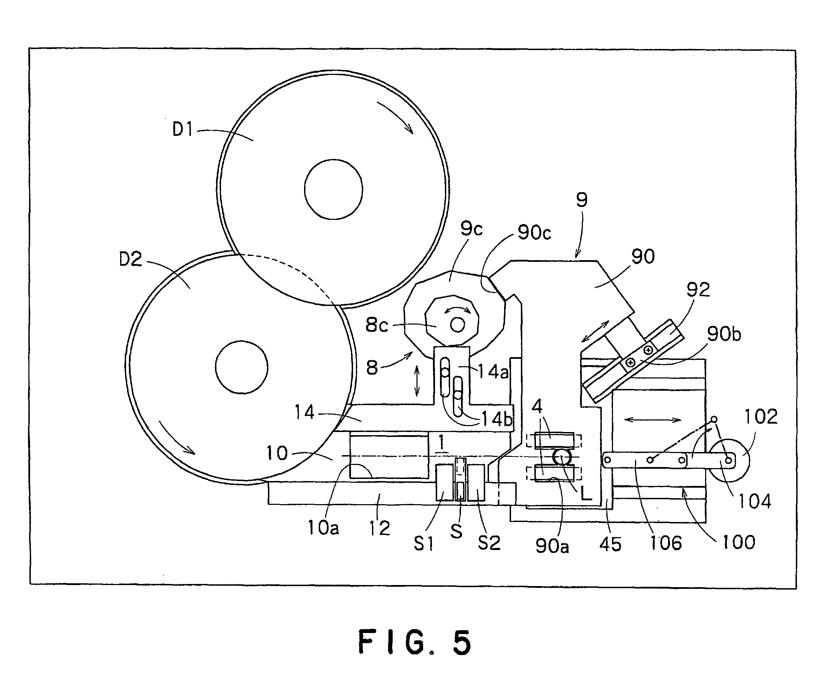

FIGS. 4 and 5 schematically show the internal construction of the coin wrapping machine shown in FIG. 3. As shown in FIGS. 4 and 5, in the coin wrapping machine, a rotating disk D1 corresponding to the hopper H, and a rotating disk D2 adjacent to the rotating disk D1 are provided. A substantially horizontal coin passage 1 extending from the latter rotating disk D2 in substantially tangential directions is also provided. The coin passage 1 is designed to guide a plurality of coins sequentially supplied from the rotating disk D2, in a row in the direction of diameter of the coins.

As shown in FIG. 4, there is provided a conveying mechanism 2 for conveying coins along the coin passage 1, and a coin stacking section 3 corresponding to the end portion of the coin passage 1. The coin stacking section 3 serves to stack the coins that have been conveyed by the conveying mechanism 2, in a row in a direction of thickness of the coins (substantially vertically upward in this case).

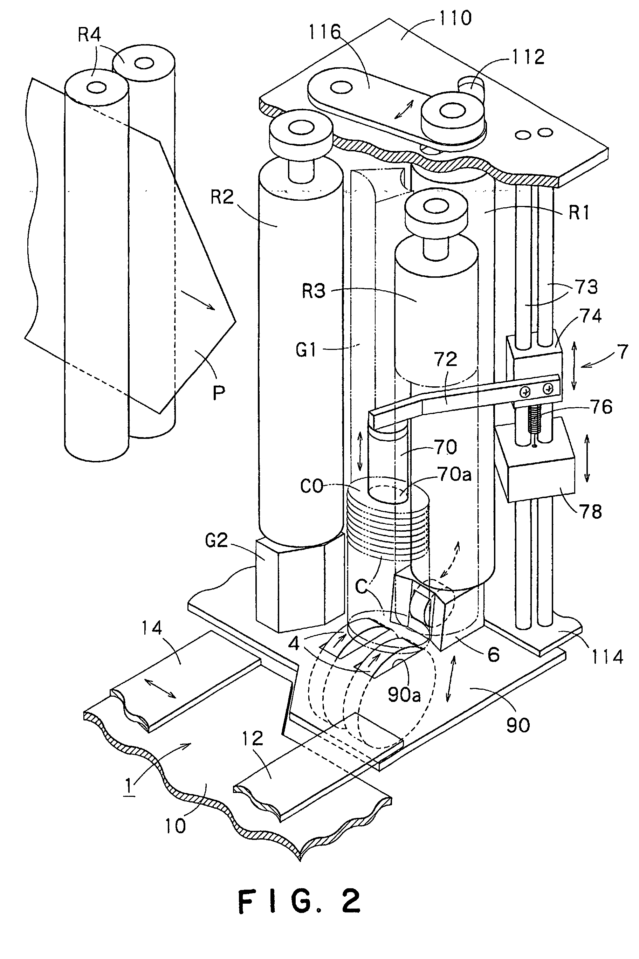

The coin stacking section 3 is formed in a wrapping section W of the coin wrapping machine. Specifically, the coin stacking section 3 is formed between three wrapping rollers R1, R2 and R3 arranged in the wrapping section W. The wrapping section W is provided with a coin presser mechanism 7 (see FIGS. 1 and 2) for downwardly pressing the coins stacked in the stacking section 3, although it is not shown in FIG. 4.

Below the coin stacking section 3, a pair of coin feeding rollers (coin feeding members) 4 (see FIG. 5), and a driving system 5 for rotating the coin feeding rollers 4 are provided. The coin feeding rollers 4 serve to sequentially stack the conveyed coins that have been conveyed to the end portion of the coin passage 1, in the stacking section 3. The wrapped coin box B is arranged below the coin stacking section 3, the feeding rollers 4 and the driving system 5.

As shown in FIG. 5, a passage width adjusting mechanism 8, a feeding roller position adjusting mechanism 9 and a retracting mechanism 100 are provided as a translational moving mechanism on a substantially horizontal plane. The width adjusting mechanism 8 serves to adjust the width of the coin passage 1 in accordance with the diameter of the coin. The position adjusting mechanism 9 serves to adjust the position of the feeding rollers with respect to the coin passage 1 in accordance with the diameter of the coin. The retracting mechanism 100 serves to retract the feeding rollers 4 and the driving system 5 from the position below the stacking section 3 when the wrapped coins are caused to fall from the stacking section 3 into the wrapped coin box B.

### <Concrete Constructions of Respective Sections>

The concrete constructions of the above described (1) coin passage 1, (2) wrapping section W including coin stacking section 3, (3) coin feeding rollers 4 and driving system 5, (4) coin presser mechanism 7, (5) passage width adjusting mechanism 8 and feeding roller position adjusting mechanism 9, and (6) retracting mechanism 100 will be sequentially described below.

### (1) Coin Passage

As shown in FIG. 5, the coin passage 1 comprises a passage bottom plate 10, a fixed passage member 12 and a movable passage member 14. The passage bottom plate 10 is in the form of a substantially flat plate and has a rectangular coin dropping hole 10a in the central portion thereof. The dropping hole 10a serves to selectively drop a coin having a diameter smaller than that of a coin corresponding to the width of the passage.

The fixed passage member 12 is fixed to one side edge of the passage bottom plate 10. The movable passage member 14 is designed to move on the passage bottom plate 10 with respect to the fixed passage member 12 in lateral directions so as to adjust the width of the coin passage 1. Specifically, the variable passage member 14 has a protruding portion 14a protruding outward in a lateral direction of the passage, and is slidably guided in lateral directions of the passage by means of two long holes 14b formed in the protruding portion 14a.

On the side of the end portion of the coin passage 1, the fixed passage member 12 is sequentially provided with a passage sensor S1, a stopper S and a counting sensor S2. The counting sensor S2 serves to count the number of coins fed from the coin passage 1. The passage sensor S1 serves to detect the passage of a coin of a predetermined ordinal number to cause the stopper S to enter the passage 1 to stop the subsequent coin.

### (2) Wrapping Section including Coin Stacking Section

The wrapping section W including the coin stacking section 3 specifically has a structure shown in FIGS. 1 and 2. That is, the three wrapping rollers R1, R2 and R2 each having an axis of rotation extending in substantially vertical directions are arranged at intervals in horizontal directions, and post-like guide members G1 are provided between the wrapping rollers R1, R2 and R3, respectively (only one guide member is illustrated in FIG. 2). Post-like space surrounded by the wrapping rollers R1, R2, R3 and the guide members G1 forms the coin stacking section 3.

The wrapping roller R1 arranged on the downstream side in a coin conveying direction (on the right side in FIG. 1) is movable along an arc-shaped slit 112 formed in a top board 110, in accordance with the oscillation of a lever 116 connected to the top portion of the roller R1. Of the two wrapping rollers R2 and R3 arranged on the upstream side in the coin conveying direction (on the left side in FIG. 1), the wrapping roller R2 is movable in accordance with the oscillation of a lever 118 (FIG. 1), in the same way as the wrapping roller R1, and the other wrapping roller R3 is fixed.

Below the wrapping roller R1, a stopping member 6 is provided. The stopping member 6 is designed to move with the wrapping roller R1 along the arc-shaped slit 112, and the direction of the stopping member 6 is constant regardless of the rotation of the wrapping roller R1. The stopping member 6 has a stopping member body 62 having a contact surface 60, and a guide roller 64 movable in the body 62 (FIG. 1).

The contact surface 60 of the stopping member 6 is a substantially recessed cylindrical surface (FIG. 2), and is designed to contact the leading edge of a coin C passing over the coin feeding rollers 4. The guide roller 64 of the stopping member 6 slightly protrudes from the contact surface 60 to help the vertical movement of the coin C along the contact surface 60.

As shown in FIG. 2, below the wrapping roller R2, a guide member G2 for guiding the coin C entering from the coin passage 1 is provided. Also below the wrapping roller R3, the same guide member (not shown) as the guide member G2 is provided symmetrically with respect thereto. A pair of wrapping paper rollers R4, R4 for feeding the wrapping paper P to the wrapping rollers R1, R2 and R3 are provided in parallel to the wrapping rollers R1, R2 and R3.

### (3) Coin Feeding Rollers and Driving System

As shown in FIG. 1, the outer peripheral surface of each of the coin feeding rollers (coin feeding members) 4 constitutes a cylindrical rotating friction surface 40. At least the outer peripheral surface of the coin feeding rollers 4 are formed of friction material, such as urethane foam. The top end portions of the coin feeding rollers 4 are arranged so as to correspond to the end portion of the coin passage 1 to protrude into the stacking portion 3. In this case, as shown in FIG. 2, a flat-plate-like roller moving member 90 corresponding to the bottom portion of the coin stacking portion 3 is formed with an opening 90a through which the top end portion of each of the feeding rollers 4 protrudes upwards.

As will be described later, the rotating friction surfaces 40 of the feeding rollers 4 are designed to rotate while contacting the bottom surface of the conveyed coin C, to cause the coin C to get over the surfaces 40 from upstream side (left side in FIG. 1) to downstream side (right side in FIG. 1) with respect to the direction of rotation thereof, to displace the trailing edge of the coin C upwards, i.e., the stacking direction, so that the leading edge of the subsequently conveyed coin C can enter between the displaced coin C and the friction surfaces 40.

As shown in FIG. 1, the driving system 5 has two pulleys 50 and 52, and a belt 54 extending between the pulleys 50 and 52. The driving system 5 also has a motor 56 whose driving shaft is fixed to one pulley 52. The other pulley 50 is coaxially fixed to the feeding rollers 4 so that the rotation of the motor 56 is transmitted to the feeding rollers 4 via the belt 54. In this case, the feeding rollers 4 are designed to be capable of freely rotating in the direction of rotation based on the driving system 5.

The rotation shaft of the feeding rollers 4 and the motor 56 are mounted on a supporting member 45 provided below the roller moving member 90. Between the pair of feeding rollers 4, a supporting rod L is arranged so as to pass through the roller moving member 90 to move upwards (see FIG. 5).

### (4) Coin Presser Mechanism

As shown in FIGS. 1 and 2, the coin presser mechanism 7 has a presser member 70 contacting the upper surface of the uppermost coin C0 stacked in the stacking section 3. The presser member 70 has a cylindrical shape as a whole, and is arranged substantially in the center of the stacking section 3 in parallel to the wrapping rollers R1 through R3. On the bottom end of the presser member 70, an inclined bottom face 70a is formed so as to correspond to the coin C obliquely stacked in the stacking section 3 (i.e. the trailing edges of the attacked coins C are lifted).

The presser member 70 is connected to a sliding member 74 via a lateral supporting member 72. A pair of guide rods 73, 73 extends substantially vertically between the top board 110 and a bottom board 114. Each guide rod 73 freely passes through the sliding member 74. Below the sliding member 74, a weight member 78, through which the pair of guide rods 73, 73 slidably pass, is arranged. Theweight member 78 is connected to the sliding member 74 via a coil spring (elastic member) 76.

With this construction, the coin presser mechanism 7 is adapted to always (i.e. regardless of the number of stacked coins) downwardly press the upper surface of the uppermost coin C0 stacked in the stacking section 3, by the dead weight of the coin presser mechanism 7. In this case, the dead weight of the coin presser mechanism 7 means gravity acting on the total mass of the presser member 70, supporting member 72, sliding member 74, coil spring 76 and weight member 78 (providing, no vertical acceleration occurs).

### (5) Passage Width Adjusting Mechanism and Feeding Roller Position Adjusting Mechanism

In FIG. 5, as described above, the movable passage member 14 has the protruding portion 14 protruding outward in the lateral direction of the passage, and is slidably guided in the lateral directions of the passage. The width adjusting mechanism 8 has a biasing member (not shown), such as a spring, for biasing the movable passage member 14 outward in the lateral direction of the passage, and a cam 8c for passage width provided so as to correspond to the tip of the protruding portion 14a of the movable passage member 14.

The tip of the protruding portion 14a of the movable passage member 14 is designed to be pressed against the profile surface of the cam 8c for passage width by the biasing force of the biasing member. In this case, the profile of the cam 8c has a polygonal shape corresponding to the diameters of a plurality of kinds of coins. That is, by moving the movable passage member 14 in the lateral directions of the passage by the rotation of the cam 8c, the width of the coin passage 1 can be adjusted so as to correspond to the diameter of the coin.

The position adjusting mechanism 9 has a cam 9c for roller position provided so as to be coaxial with the cam 8c for passage width. Similar to the cam 8c for passage width, the cam 9c has a polygonal profile corresponding to the diameters of a plurality of kinds of coins. The roller moving member 90 is formed with a contact portion 90c corresponding to the cam 9c.

The roller moving member 90 is provided with a sliding portion 90b. On the other hand, an oblique guide member 92 is mounted on the supporting member 45. By the oblique guide member 92, the sliding portion 90b is slidably guided obliquely between the lower-left side and the upper-right side by about 45 degrees in FIG. 5. A biasing member (not shown), such as a spring, , is provided for biasing the roller moving member 90 obliquely toward the lower-left side. Thus, the contact portion 90c of the roller moving member 90 is adapted to be pressed against the profile surface of the cam 9c by the biasing force of the biasing member.

That is, by moving the roller moving member 90 in the guiding direction due to the oblique guide member 92 by the rotation of the cam 9c synchronized with the cam 8c, the position of the feeding rollers 4 with respect to the coin passage 1 can be adjusted so as to correspond to the diameter of the coin (as will be described later).

The cam 8c for passage width and the cam 9c for roller position should not be limited to the above described cams having the polygonal profile, but the cams may be a step-less cam having a curved profile.

### (6) Retracting Mechanism

As shown in FIGS. 4 and 5, the retracting mechanism 100 has a motor 102, a driving link 104 and a driven link 106. The proximal end of the driving link 104 is connected to a driving shaft of the motor 102, and the distal end of the driving link 104 is connected to one end of the driven link 106. The other end of the driven link 106 is connected to the supporting member 45. The supporting member is slidably guided between the right side and the left side of FIGS. 4 and 5.

Therefore, the driving link 104, the driven link 106 and the supporting member 45 form a slider-crank mechanism, and the supporting member 45 (together with the oblique guide member 92 and the roller moving member 90) can be moved by the rotation of the motor 102 between the right side and the left side of FIGS. 4 and 5.

### <Operation/Function>

The operation/function of this preferred embodiment with such constructions will be described. (1) The operation/function during the stacking of coins, (2) the operation/function with respect to the wrapping of the stacked coins, and (3) the operation/function during the changing of denomination of the coins will be sequentially described below.

### (1) Operation/Function during Staking of Coins

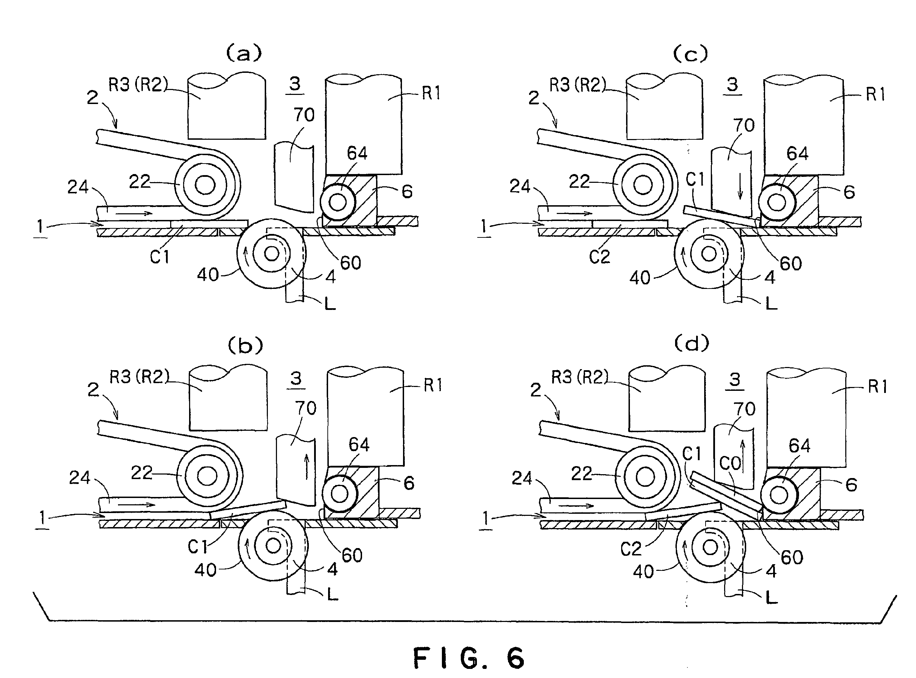

First, referring to FIG. 6, the operation/function during the stacking of coins in the stacking section 3 will be described below.

FIG. 6(a) shows a state that the leading edge of a conveyed coin C1, which has been conveyed to the end portion of the coin passage 1 by the conveying belt 24 of the conveying mechanism 2, reaches the rotating friction surfaces 40 of the feeding rollers 4. From this state, the friction surfaces 40 lifts the frond edge of the conveyed coin C1 to rotate while contacting the lower surface of the coin C1 (FIG. 6(b), to cause the coin C1 to get over the friction surfaces 40 from the upstream side to the downstream side of the friction surface with respect to the direction of rotation (FIG. 6(c)).

Thus, the trailing edge of the previously conveyed coin (preceding coin) C1 is displaced in the stacking direction so that the leading edge of the subsequently conveyed coin (subsequent coin) C2 can enter between the coin C1 and the friction surfaces 40 of the feeding rollers 4.

Then, the subsequent coin C2, which has entered between the preceding coin C1 and the friction surfaces 40 of the feeding rollers 4, also gets over the friction surfaces 40 in accordance with the rotation of the friction surfaces 40, in the same way as the preceding coin C1 (FIG. 6(d), showing a state that the subsequent coin C2 as a third conveyed coin is fed below the preceding coin C1 as a second conveyed coin, by jumping by one coin from the state after FIG. 6(c)).

By repeating the above described operation, a plurality of conveyed coins are sequentially stacked in the stacking section (for example, as shown in FIGS. 1 and 2). Meanwhile, the coin presser mechanism 7 always presses the upper surface of the uppermost coin C0 stacked in the stacking section 3 by dead weight thereof (via the bottom face 70a of the presser member 7).

Assuming that the set number of coins to be stacked in the coin stacking section 3 is X (e.g. X=50), the coin stacking operation ends as follows. That is, if the counting sensor S2 shown in FIG. 5 counts the (X-1)-th (forty-ninth) coin and if the passage sensor S1 detects the passage of the next X-th (fiftieth) coin, the stopper S enters the coin passage 1. Immediately thereafter, the conveyance of the coins by the conveying mechanism 2 and the rotation of the coin feeding rollers 4 are stopped, and the operation for stacking the X coins ends.

### (2) Operation/Function with respect to Wrapping of Stacked Coins

Referring to FIGS. 1, 2, 4 and 5, the operation/function with respect to the wrapping of stacked coins will be briefly described below.

First, after a predetermined number of coins are stacked in the coin stacking section 3, the supporting rod L shown in FIG. 1 presses the stacked coins from bottom to lift the coins to a predetermined coin wrapping position. In accordance therewith, the stacked coins stacked stairs-wise in an oblique state are arranged so as to be horizontal. Then, by moving the wrapping rollers R1 and R2 by means of the levers 116 and 118 shown in FIGS. 1 and 2, the three wrapping rollers R1, R2 and R3 are caused to relatively approach each other to clamp the stacked coins.

Then, by the rotation of the three wrapping rollers R1, R2 and R3, the stacked coins are rotated. By utilizing this rotation, the wrapping paper P (FIG. 2) fed by the pair of wrapping rollers R4, R4 is wound onto the stacked coins from between the two wrapping rollers R1 and R2. The top and bottom ends of the wound wrapping paper P is caulked by a predetermined caulking system (not shown). At this point, the supporting rod L is retracted downwards.

Then, by means of the retracting mechanism 100 shown in FIGS. 4 and 5, the feeding rollers 4 and the driving system 5, together with the supporting member 45, the oblique guide member 92 and the roller moving member 90, are retracted to the right in FIGS. 4 and 5. After the retraction is completed, by releasing the clamping of the coins between the wrapping rollers R1, R2 and R3, the wrapped coins drop into the wrapped coin box B from the stacking section 3 (via, e.g., a chute (not shown)).

### (3) Operation/Function during Change of Denomination

Referring to FIGS. 2, 5 and 7a through 8b, the operation/function during the change of denomination for coins having different diameters will be described. This denomination changing operation is mechanically or electrically carried out on the basis of the operation of, e.g., the denomination setting dial V in the coin wrapping machine shown in FIG. 3 (or a switch such as another push button).

First, in FIG. 5, the width of the coin passage 1 is adjusted so as to correspond to the diameter of the coin, by rotating the cam 8c for passage width to a rotational position corresponding to the diameter of the coin to move the movable passage member 14 in the lateral direction of the passage.

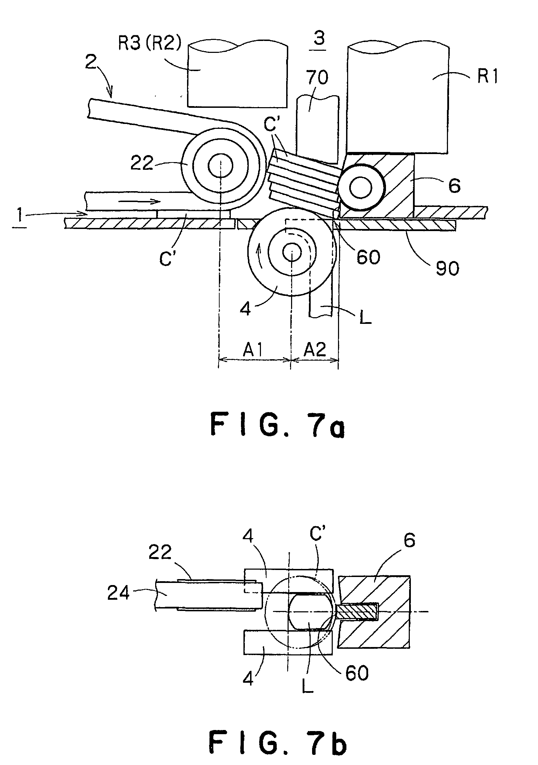

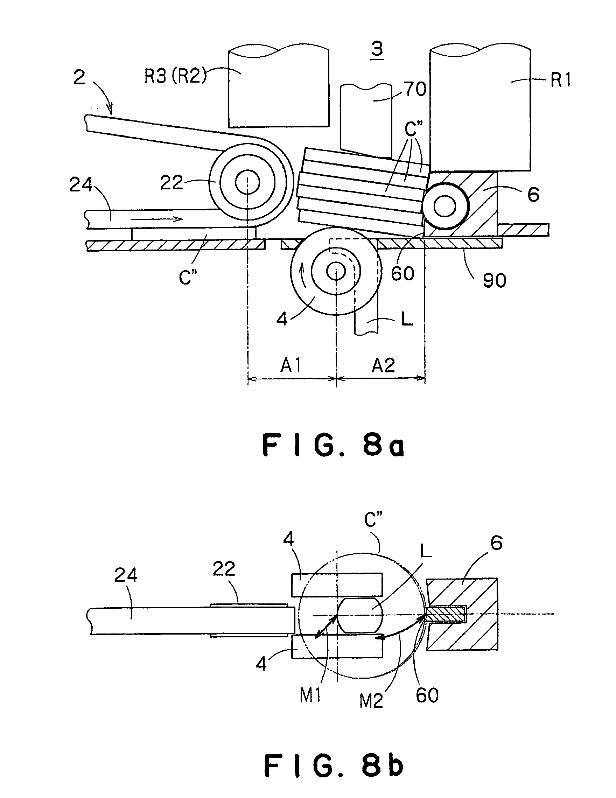

Then, with respect to the positions of the coin feeding rollers 4 and the stopping member 6, FIGS. 7a and 7b show positions corresponding to a small-diameter coin C', and FIGS. 8 and 8b show positions corresponding to a large-diameter coin C". FIGS. 7a and 8a show a distance A1 between the centers of the pulley 22 of the conveying mechanism 2 and the feeding rollers 4, and a distance A2 between the center of the feeding rollers 4 and the stopping surface 60 of the stopping member 6.

FIGS. 7b and 8b show the relationship in the horizontal positions of the feeding roller 5 and the stopping member 6 with respect to the pulley 22. In particular, FIG. 8b shows the moving locus of the central position with respect to the pair of feeding rollers 4 by arrow M1, and the moving locus of the center of the stopping surface 60 of the stopping member 6 by arrow M2.

First, in FIG. 5, the position of the feeding rollers 4 is adjusted to a position corresponding to the diameter of the coin, by rotating the cam 9c for roller position (together with the cam 8c for passage width) to a rotational position corresponding to the diameter of the coin to move the roller moving member 90 in the guiding direction due to the oblique guide member 92 (in the direction of arrow M1 in FIG. 8b). Specifically, the distance A1 shown in FIGS. 7a and 8a increases or decreases in accordance with the diameter of the coin, and the position of the feeding rollers 4 in the lateral directions of the passage is shifted. As shown in FIG. 5, the latter position in the lateral directions of the passage is moved in accordance with the movement of the movable passage member 14 so that the feeding rollers 4 are always positioned substantially on the center line of the coin passage 1.

Then, in FIG. 2, the position of the stopping member 6 (together with the wrapping roller R1) is adjusted to a position corresponding to the diameter of the coin by oscillating the lever 116 to an oscillating position corresponding to the diameter of the coin. Specifically, the distance A2 from the feeding rollers 4 shown in FIGS. 7a and 8a increases or decreases in accordance with the diameter of the coin, and the position of the stopping member 6 in the lateral direction of the passage is also shifted. As shown in FIGS. 7b and 8b, the latter position in the lateral direction of the passage is moved so that the stopping member 6 always substantially corresponds to the position of the feeding rollers 14.

### <Effects>

The effects provided by this preferred embodiment will be described below.

According to this preferred embodiment, as described above, the coins can be stacked by means of the feeding rollers 4 each having the cylindrical rotating friction surface 40 in place of the conventional toothed roller. For that reason, it is possible to avoid the functional restrictions caused by the relationship between the length of a tooth and the diameter of the coins in a conventional toothed roller, and to increase an adaptable range of diameters of the coins.

Since the friction surfaces 40 of the feeding rollers 4 can be positively rotated by the driving system 5, it is possible to avoid an engagement between peripheral grooves of the coins due to the pressing of the coins to each other in the direction of diameter of the coins, such as a case where the friction surfaces 40 of the feeding rollers 4 are passively rotated by the driving force applied to the conveyed coin C. The term "peripheral groove" means circular groove formed in the peripheral surface of a coin, such as a Euro two cent coin.

By adjusting the position of the feeding rollers 4 with respect to the coin passage 1 in accordance with the diameter of the coin by the position adjusting mechanism 9, the above described function of the friction surfaces 40 of the feeding rollers 4 for "lifting the leading edge of the conveyed coin to rotate while contacting the lower surface of the coin, to cause the coin to get over the friction surfaces 40 from the upstream side to the downstream side of the friction surface 40 with respect to the direction of rotation thereof" can be always surely carried out in accordance with the variation in diameter of the coin.

Since the distance A2 between the center of the feeding rollers 4 and the contact surface 60 of the stopping member 6 can be adjusted so as to correspond to the diameter of the coin, the above described function of the feeding rollers 4 for "displacing the trailing edge of the coin C getting over the rotating friction surfaces 40 upwards (in stacking direction)" can be always surely carried out in spite of the variation in diameter of the coin.

Since the coin presser mechanism 7 for always pressing the upper surface of the uppermost coin C0 stacked in the stacking section 3 by dead weight thereof (regardless of the number of stacked coins) is provided, stacking failure due to the rising of coins in the stacking section 3 can be surely prevented to the end, unlike a conventional coin presser mechanism wherein pressing is released after a predetermined number of coins are stacked. When the stacked coins are lifted to the coin wrapping position by the supporting rod L, the shifting and dropping of the stacked coins can be surely prevented by clamping the stacked coins from bottom and top by the supporting rod L and the coin presser mechanism 7.

According to this presser mechanism 7, when the subsequent coin enters the stacking section 3 to lift the presser member 70, the inertia force of the weight member 78 acting on the stacked coins via the presser member 70 can be relieved by the coil spring 76. Thus, it is possible to allow the subsequent coin to easily enter the stacking section while securing the pressing function of the whole presser mechanism 7 by dead weight.

### [Second Preferred Embodiment]

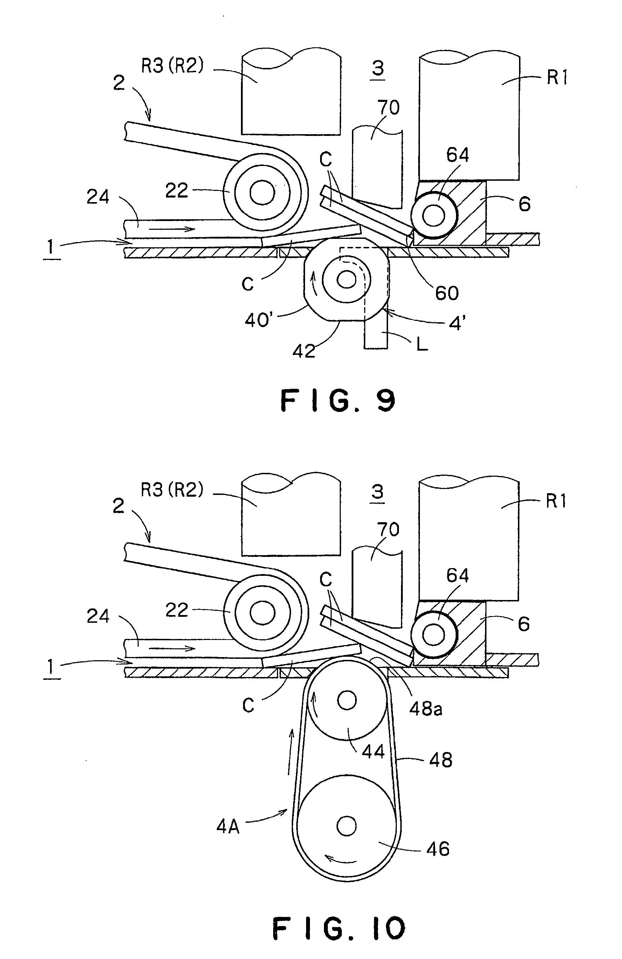

Referring to FIG. 9, the second preferred embodiment of the present invention will be described below.

### <Construction>

As shown in FIG. 9, this preferred embodiment is different from the above described first preferred embodiment in respect of the fact that a coin feeding rollers 4' having an uneven rotating friction surfaces 40' (with irregularities) is provided in place of the above described coin feeding rollers 4, and other constructions are the same as those in the above described first preferred embodiment shown in FIGS. 1 through 8.

Specifically, as shown in FIG. 9, the rotating friction surfaces 40' of the coin feeding rollers 4' in this preferred embodiment is uneven by forming a plurality of substantially flat chamfered portions 42 at intervals in circumferential directions. In place of such chamfered portions 42, any protruding portions and recessed portions may be formed at intervals in circumferential directions, or the shape of the whole friction surface may be a regular polygon, such as a regular dodecagon.

### <Functional Effects>

The functional effects of this preferred embodiment with such constructions will be described. According to this preferred embodiment, by applying vibrations to the coin C by the irregularities of the rotating friction surfaces 40', the interference state, such as an engagement between the coins C, can be easily released to ensure smooth stacking operation. As such an engagement between the coins C, engagement of the surface relief of one coin with the periphery of the other coin is considered in addition to the above described engagement between peripheral grooves of the coins.

### [Third Preferred Embodiment]

Referring to FIG. 10, the third preferred embodiment of the present invention will be described below.

### <Construction>

As shown in FIG. 10, this preferred embodiment is different from the above described first preferred embodiment in respect of the fact that a coin feeding belt 4A is provided as a coin feeding member in place of the above described coin feeding rollers 4, and other constructions are the same as those in the above described first preferred embodiment shown in FIGS. 1 through 8.

Specifically, as shown in FIG. 10, the above described feeding belt 4A extends between a set of upper and lower pulleys 44 and 46, and the lower pulley 46 is rotated by the above described driving system 5. A portion 48a of the outer surface 48 of the feeding belt 4A over the top end portion of the upper pulley 44 functions as a cylindrical rotating friction surface corresponding to the friction surfaces 40 of the feeding rollers 4.

### <Modified Example>

From the same standpoint as that in the above described second preferred embodiment, in this preferred embodiment, any irregularities may be formed on the outer surface 48 of the coin feeding belt 4A.

### [Other Preferred Embodiments]

While coins have been stacked substantially vertically upwards in the above described preferred embodiments, the present invention should not be limited thereto. That is, coins may be stacked substantially vertically downwards or substantially horizontally. As an example, a case where coins are stacked substantially vertically downwards will be described below.

That is, the directions of the coin feeding members 4, 4' or 4A and the coin stacking section 3 in the above described preferred embodiments are turned upside down and a pushing mechanism for pressing coins in the stacking section 3, upwards is provided in place of the presser mechanism 7. Thus, coins are stacked downwards by the same operation as that in the above described preferred embodiments while the uppermost coin is pressed against the rotating friction surfaces 40, 40' or 48a of the coin feeding members 4, 4' or 4A by means of the pushing mechanism.

The coin stacking section 3 should not be limited to the section surrounded by the three wrapping rollers R1, R2 and R3, but it may be a section surrounded by a plurality of rods or a section surrounded by substantially cylindrical structure, such as a circular cylinder or the like. The above described coin passage 1 should not be limited to the horizontal and/or straight passage, but it may be inclined or bent. The above described conveying means 2 should not be limited to means using the belt 24, but is may be means using a plurality of rollers or the like.

## Claims

1. A coin stacking apparatus comprising:
a coin passage for guiding a plurality of coins in a row in a direction of diameter of the coins;
a conveying mechanism for conveying the coins along said coin passage;
a coin stacking section provided so as to correspond to the end portion of said coin passage, for stacking the coins that have been conveyed by said conveying mechanism, in a row in a direction of thickness of the coins; and
a coin feeding member for sequentially stacking the conveyed coins that have been conveyed to an end portion of said coin passage, in said stacking section,
wherein said feeding member has a cylindrical rotating friction surface protruding in said stacking section so as to correspond to the end portion of said coin passage, and
said rotating friction surface rotates while contacting one surface of the conveyed coin, to cause the coin to get over from an upstream side to a downstream side of said friction surface with respect to the direction of rotation thereof, to displace the trailing edge of the coin in the stacking direction so that the leading edge of a subsequently conveyed coin is capable of entering between the previously conveyed coin and said friction surface.

2. The coin stacking apparatus as set forth in claim 1, further comprising a driving system for rotating the friction surface of said feeding member.

3. The coin stacking apparatus as set forth in claim 2, wherein said feeding member is formed so that said friction surface is capable of freely rotating in the direction of rotation based on said driving system.

4. The coin stacking apparatus as set forth in any one of claims 1 through 3, wherein irregularities are formed on the friction surface of said feeding member.

5. The coin stacking apparatus as set forth in claim 1, wherein the position of said feeding member with respect to said coin passage is adjustable in accordance with the diameter of the coins.

6. The coin stacking apparatus as set forth in claim 1 or 5, wherein a stopping member having a contact surface contacting the leading edge of the coin that has got over the friction surface is provided on the downstream side of said friction surface with respect to the direction of rotation thereof, and
the distance between an axis of rotation of the friction surface of said feeding member and the contact surface of said stopping member is adjustable in accordance with the diameter of the coins.

7. The coin stacking apparatus as set forth in claim 1, wherein said stacking section is configured to stack the coins substantially vertically upwards, and
said coin stacking apparatus further comprises a coin presser mechanism for always downwardly pressing an upper surface of an uppermost coin stacked in said stacking section by dead weight.

8. The coin stacking apparatus as set forth in claim 7, wherein said presser mechanism has a presser member movable in a coin stacking direction while contacting the upper surface of the uppermost coin, and a weight member connected to the presser member via an elastic member.
